Europäisches Patentamt

European Patent Office

Office européen des brevets

(11) Publication number: **0 190 026**
**A2**

# EUROPEAN PATENT APPLICATION

(21) Application number: **86300531.0**

(22) Date of filing: **27.01.86**

(51) Int. Cl.⁴: **G 02 F 1/133**

(30) Priority: **01.02.85 GB 8502575**

(43) Date of publication of application:
**06.08.86 Bulletin 86/32**

(84) Designated Contracting States:
**AT BE CH DE FR IT LI LU NL SE**

(71) Applicant: **ITT INDUSTRIES INC.**
**320 Park Avenue**
**New York, NY 10022(US)**

(72) Inventor: **Crossland, William Alden**
**15 School Lane**
**Harlow Essex(GB)**

(74) Representative: **Ruffhead, Philip Geoffrey**
**ITT-UK Patent Department Maidstone Road Foots Cray**
**Sidcup DA14 5HT(GB)**

(54) **Liquid crystal cells.**

(57) A liquid crystal cell having two sheets (1, 2) secured together with a perimeter seal (3) in which one of the sheets (2) is made of transparent vermiculite. This material can be made in self-supporting membrane form, thinner than glass but is sufficiently robust to act as a substrate upon which to deposit an indium tin oxide transparent electrode layer.

EP 0 190 026 A2

Croydon Printing Company Ltd.

LIQUID CRYSTAL CELLS

This invention relates to liquid crystal cells.

For most optical applications employing liquid crystals the liquid crystal medium is required in a layer of well defined thickness which is provided by the filling of a cell with the medium, such a cell having the form of an envelope possessing a well-defined spacing between its inwardly facing major surfaces. The walls of the cell envelope need to be made of or surfaced with inert material that will not react with the liquid crystal medium, and for most applications at least one and often both walls need to be made of transparent material, and needs to carry a transparent electrode layer or pattern on the surface facing the interior of the cell. Frequently such an electrode layer or pattern needs to be covered with an inert electronically insulating transparent coating that will prevent direct electrical contact between the electrode and the liquid crystal.

Typically transparent electrode layers or patterns are formed of indium tin oxide (ITO), and the conventional manner in which such material is deposited upon a substrate involves conditions that preclude the use of conventional organic plastics materials as substrates for this purpose. In consequence glass has been used as transparent substrate material upon which to deposit ITO.

For a number of applications it is desirable to employ as thin a wall as possible in the construction of a liquid crystal cell. Typically this is to avoid parallax problems between a pattern formed in the liquid crystal layer and a pattern located immediately behind the cell, or between the pattern formed in the liquid crystal layer and its image formed by reflection in a mirror placed immediately behind the cell. Self-supporting plastics membranes can be constructed that are very much thinner than the thinnest glass sheet of equivalent area but, as stated above, organic plastics membranes are not suitable as substrates upon which to deposit ITO.

The present invention is concerned with the construction of a liquid crystal cell in which at least one of the major cell walls is made of transparent material that is thinner than the thinnest practical self-supporting glass sheet of equivalent area.

According to the present invention, a liquid crystal cell of the kind in which two sheets are secured together with a perimeter seal to define an envelope for a liquid crystal layer of defined thickness is characterised in that at least one of said sheets is a transparent sheet of vermiculite which sheet is thinner than the thinnest practical self-supporting glass sheet of equivalent area.

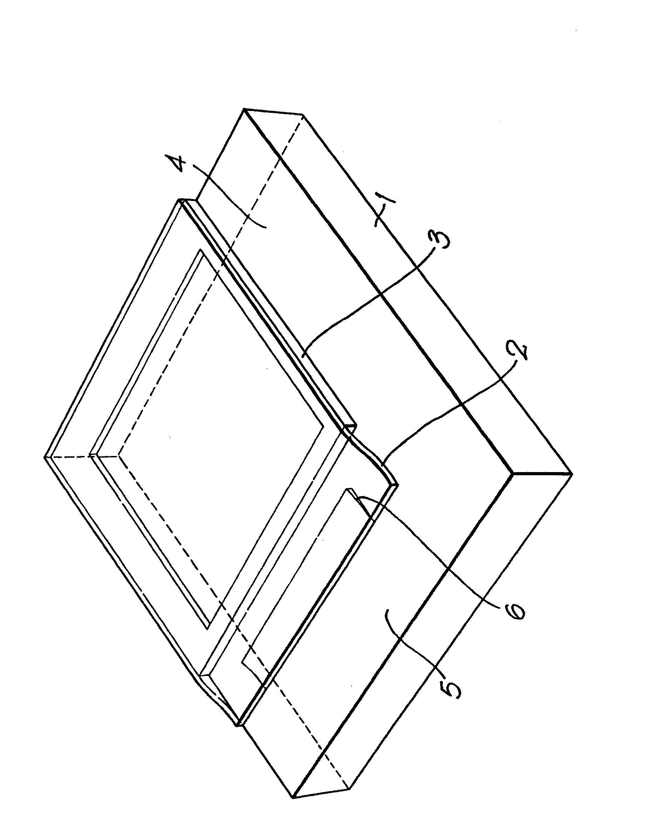

There follows a descripton of the manufacture of a liquid crystal cell embodying the invention in a preferred form. The description refers to the accompanying drawing which depicts a schematic perspective view of the cell.

A glass sheet 1 and a thin transparent vermiculite sheet 2, that has been made by the process described in United Kingdom Patent Specification Nos. 1593382 and 1593383 both have a layer (not shown) of ITO deposited upon one major surface by the conventional method for depositing ITO transparent electrode layers on glass. These ITO layers are patterned as required to produce any requisite electrode pattern for the cell. Optionally, within the display area of the cell, the ITO electrode layer is covered with a thin electrically insulating layer that will prevent direct electrical contact between the ITO and the liquid crystal medium that will fill the cell. The cell filling may contain a constituent that induces the requisite surface alignment, homeotropic or planar, or alternatively the surfaces of the sheets may be appropriately treated to provide the requisite alignment. A perimeter seal 3 of uncured epoxy resin is screen printed on to the glass sheet 1 on the face bearing the ITO electrode, and the area enclosed by this seal is provided with a light scattering of uniform diameter short lengths (not shown) of glass fibre which are to serve as spacers for the cell. Then the vermiculite sheet 2 is placed in position on the perimeter seal with its ITO layer facing the ITO layer of the glass sheet 1. At this stage the cell assembly is ready for the curing of its perimeter seal, after which it is filled by way of an aperture (not shown) extending through the thickness of the glass sheet and located in one corner of the area enclosed by the seal. Conveniently, a second aperture is provided in the opposite corner so as to enable a through filling technique rather than a vacuum back-fill. Once the filling has been completed the aperture or apertures are sealed off to provide a hermetically sealed cell.

The glass sheet 1 extends beyond the perimeter seal 3 to provide regions 4 and 5 for making terminal connections with the electrodes within the display area enclosed by the perimeter seal. The Electrodes within the display area enclosed by the perimeter seal that are carried on the glass extend direct to region 4, while those that are carried on the vermiculite are in this instance electrically connected with corresponding electrodes at region 5 by means of a front-to-back connecting fillet 6. This fillet 6 is provided by a carbon loaded resin of the type described in our British Patent Specification No. 2100933A.

CLAIMS:

1. A liquid crystal cell of the kind in which two sheets (1, 2) are secured together with a perimeter seal (3) to define an envelope for a liquid crystal layer of defined thickness characterised in that at least one of said sheets (2) is a transparent sheet of vermiculite which sheet is thinner than the thinnest practical self-supporting glass sheet of equivalent area.